# EUROPEAN PATENT APPLICATION

(11) **EP 2 860 645 A1**
(43) Date of publication of application: **15.04.2015**
(21) Application number: 13883842.0
(22) Date of filing: 12.08.2013
(51) Int. Cl.: G06F 17/30

(54) **ALGORITHM FOR FAST CHARACTER STRING MATCHING**

(30) Priority: 09.07.2013 CN 201310287683
(71) Applicant: G-Cloud Technology Ltd, SongShan Lake Technology Industrial Zone DongGuan Guangdong 523808 (CN)
(72) Inventor: HAN, Fei, Dongguan Guangdong 523808 (CN); YANG, Song, Dongguan Guangdong 523808 (CN); MO, Zhanpeng, Dongguan Guangdong 523808 (CN); JI, Tongkai, Dongguan Guangdong 523808 (CN)
(74) Representative: Hocking, Adrian Niall
(86) International application number: PCT/CN2013/081309
(87) International publication number: WO 2015/003421

(57) **Abstract**

A rapid string matching method, in a field of information processing, includes pre-treating a target string to obtain a simple hash table of each character of the target string; when a first character of the target string is matched, readily matching with a last character of the target string. The method effectively improves a performance of matching and avoids repeated matching. The method is applicable to fields requiring rapid string searching, such as text editors, search engines and whole text search systems.

## Description

### FIELD OF INVENTION

The present invention relates to information processing, and more particularly to a rapid string matching method.

### DESCRIPTION OF RELATED ARTS

For the applications, such as the text editor, the search engine, the data processing and the communication system, the searching, positioning and statistics of a target string among a long source string are usually required to be executed at a fast speed. Supposing that the source string has a length of m and the target string has a length of n, the naive string matching algorithm, such as the strstr() algorithm of the C standard library, matches the string one by one from head to end, which induces much repeated matching of the characters of the target string and causes inefficiency, wherein the worst-case time complexity is O(m*n); although the improved matching algorithm, such as the Knuth-Morris-Pratt (KMP) algorithm, reduces the repeated matching of the characters of the target string, and thus improves the efficiency compared with the naive string algorithm, the improved matching algorithm matches with the whole m-length source string, which means the efficiency remains to be further improved.

### SUMMARY OF THE PRESENT INVENTION

An object of the present invention is to provide a rapid string matching method which improves an efficiency of matching and searching a target string.

Accordingly, in order to accomplish the above object, the present invention provides a rapid string matching method comprising steps of:
(1) pre-treating a target string to obtain a simple hash table of each character of the target string, and setting a time complexity for determining whether an arbitrary character belongs to the target string to be 1;
(2) starting matching, searching a source string for characters matching with a first character of the target string, and ending searching when an end of the source string is searched;
(3) if matching, by the searched character of the source string, with the first character of the target string, and going to step (5);
(4) if non-matching, by the searched character of the source string, with the first character of the target string, move a character pointer of the source string to next character, and go to step (2);
(5) checking whether a last character of a part of the source string which starts from the searched character matching with the first character of the target string belongs to a character of the target string, if yes, go to step (6); if not, go to step (8);
(6) checking whether the target string is wholly or partially within the part of the source string which starts from the searched character matching with the first character of the target string and ends at the length of the target string and whether a whole of the part of the source string is matched, if yes, go to step (7); if no, go to step (8);
(7) moving forwards the character pointer from a character which re-matches with the first character of the target string by the length of the target string, and going to step (2);
(8) moving forwards the character pointer from the searched character matching with the first character of the target string by the length of the target string, and going to step (2).

In the rapid string matching method of the present invention, the target string is pre-treated; matching by the source string with the first character of the target string readily triggers matching with a last character of the target string.

The present invention functions according to a high probability event in practice. The source string refers to a string to be searched. The target string refers to the string which remains to be matched.

Firstly, the characters of the string are not random characters.

Secondly, since the characters are not random characters, a certain association exists among the characters, especially between neighboring characters. For example, beside a non-vowel letter, it is more probable to emerge a vowel letter than a non-vowel letter; in Chinese grammar, it is far more probable to follow " 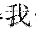 " by " 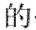 " than by " 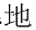 ". When a part of two or more than two close characters is matched, a matching probability for other characters beside the matched part is relatively higher than that for other characters far away from the matched part. In other words, the characters further away from the matching part has a relatively higher probability of non-matching.

Thirdly, even for a totally random string, a probability for an arbitrary character to belong to the target string is far lower than that for the arbitrary character to fall out of the target string. Given that the matching is defined as belonging to the target string by the last character, if the first character of the target string is matched but the last character is non-matched (as stated above, the non-matching probability if higher than the matching probability), it is pretty certain that the part of the source string from the first character to the last character is non-matched, needless of comparing one by one. Therefore, the part of the source string from the first character to the last character can be directly skipped and the matching continues directly from a character next to the last character.

Fourthly, among the source string, there are far more non-matched strings than matched strings, and thus it is more meaningful to improve an efficiency of searching for non-matched strings than to improve an efficiency of searching for matched strings.

Fifthly, based on the practice, the method of the present invention improves an efficiency of matching the "non-matched" strings by comparing the last character, so as to improve an efficiency of matching the "matched" string. The better matching with the aforesaid conditions results in the higher efficiency.

Sixthly, even for the pattern matching among the random characters, the method of the present invention has a better efficiency than the naive algorithm.

Tests show that the method of the present invention has an averaged time efficiency advantage of no less than 20% over the naive string matching algorithm.

### BRIEF DESCRIPTION OF THE DRAWINGS

Fig. 1 is a flow chart of a rapid string matching method according to a preferred embodiment of the present invention.
Fig. 2 is a sketch view of matching according to the preferred embodiment of the present invention.

### DETAILED DESCRIPTION OF THE PREFERRED EMBODIMENT

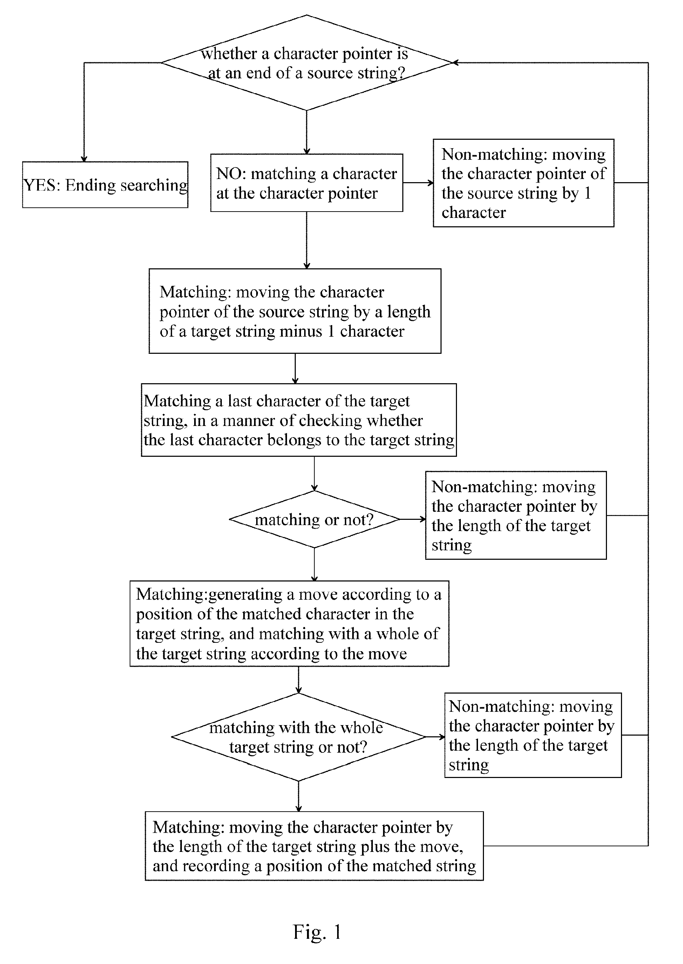

Referring to Fig. 1 of the drawings, according to a preferred embodiment of the present invention, 'target' refers to a target string; 'text' refers to a source string; 'pos' refers to a position pointer of the source string; 'found' refers to a number of matching; the characters are supposed to be ASCII codes; and codes of C programming language are only exemplary.

A rapid string searching method, according to the preferred embodiment of the present invention, comprises step (1) of: pre-treating a target string to obtain a simple hash table for rapidly searching, and setting a time complexity for determining whether an arbitrary character belongs to the target string to be 1, which are executed as the following program:
1 pos = text;
2 found = 0;
3 char *first = &target[0];
4 char *end = &target[strlen(target) - 1];
5 int i = 0;
6 pos = text;
7 char *fixtail = textend - strlen(target) -1;
8 int list[256] = {0};
9 for (int g = 0; g<strlen(target); g++) {
10 list[target[g]] = g+1; // in case of g == 0
11 }

The rapid string searching method further comprises a step of searching 'text' for 'target', comprising steps of:
(2) searching for characters matching with a first character of the target string, and ending searching when an end of the source string is searched;
(3) if matching, by the searched character of the source string, with the first character of the target string, jump to step (5);
(4) if non-matching, by the searched character of the source string, with the first character of the target string, move a character pointer of the source string to next character, and go to step (2);
(5) checking whether a last character of a part of the source string which starts from the searched character matching with the first character of the target string belongs to a character of the target string, if yes, go to step (6); if not, go to step (8);
(6) checking whether the target string is wholly or partially within the part of the source string which starts from the searched character matching with the first character of the target string and ends at the length of the target string and whether a whole of the part of the source string is matched, if yes, go to step (7); if not, go to step (8);
(7) moving forwards the character pointer from a character which re-matches with the first character of the target string by the length of the target string, and going to step (2);
(8) moving forwards the character pointer from the searched character matching with the first character of the target string by the length of the target string, and going to step (2).

Steps (2)-(8) are executed as the following program.
1 while (pos < fixtail) {
2 if (*pos == *first) {
3 if (list[*(pos + tlen)]) {
4 for (int j = 0; j < wlen; j++) {
5 if (*(end - j) == *(pos + tlen)) {
6 int i = 0;
7 char *newpos = pos + j;
8 while (i < wlen && *(newpos + i) == *(first + i))
9 i++;
10 if (i == wlen) {
11 found++;
12 pos += wlen + j;
13 break;
14 }
15 }
16 }
17 }
18 pos += wlen;
19 }
20 else {
21 pos += 1;
22 }
23 }

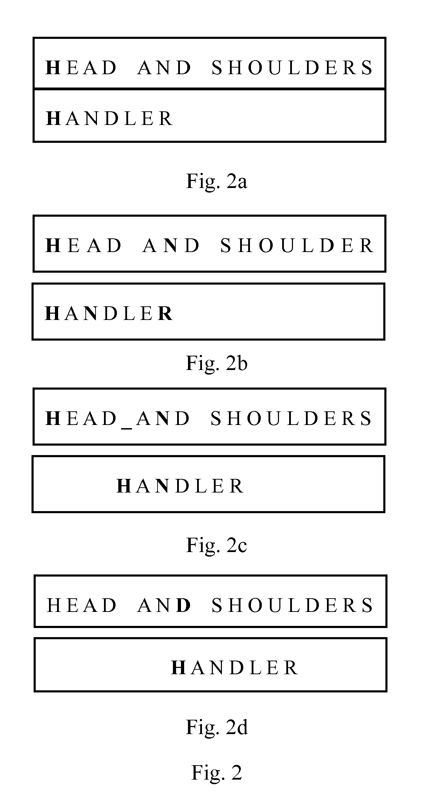

Fig. 2 shows an example of string matching according to the preferred embodiment of the present invention, wherein the target string: HANDLER; the source string: HEAD AND SHOULDERS. The string matching is illustrated as follows.
(1) As showed in Fig. 2a, the first character of the source string is compared with the first character of the target string, the respective first characters being both "H" and thus matched; otherwise, the character pointer of the source string is moved to next character.
(2) As showed in Fig. 2b, the last character of the part of the source string is for matching, and the character "N" belongs to the target string, which means the last character is matched.
(3) As showed in Fig. 2c, according to a position in the target string of the matched last character, the character pointer is moved.
(4) As showed in Fig. 2d, the character pointer is moved to a position correspondent to a position of the first character of the target string, "H", and it is found that at the position of the source string is a space which fails to match with the first character of the target string, "H", and thus is non-matched. It is checked that whether the target string has another character identical to the last character "N", and it is found that another character identical to the last character does not exist, which means the target string is still non-matched. The character pointer is moved forward from "H" of the source string by the length of the target string which is 7 characters.
(5) A next round of string matching is continued by returning to (1).

Thus, no matter whether the whole target string is wholly matched or not, the matching is executed at least by the length of the target string, so as to improve the efficiency.

The string searching method of the present invention has a higher efficiency than the common searching algorithm comprising the naive string searching algorithm, so as to speed up string matching. In a simple test, a paragraph of texts containing program source codes is searched for a designated string. Results thereof are as follows (Pentium(R) Dual-Core CPU E5800 @ 3.20GHz, 4G, no complier optimization).
» ./search list ./stringsrc
search text is [list]
strstr() found 42 in 0 sec 350 usec
fastsearch() found 42 in 0 sec 267 usec, make 0 step

In the searching of existing string, the time efficiency of the method of the present invention is 24% higher than the naive string searching algorithm.
» ./search vector ./stringsrc
search text is [vector]
strstr() found 0 in 0 sec 335 usec
fastsearch() found 0 in 0 sec 261 usec, make 0 step

In the searching of non-existing string, the time efficiency of the method of the present invention is 22% higher than the naive string searching algorithm.
» ./search ffffffffffffffffffffffffffff ./stringsrc search text is [ffffffffffffffffffffffffffff]
strstr() found 0 in 0 sec 919 usec
fastsearch() found 0 in 0 sec 467 usec, make 0 step

In the searching of some special string, the method of the present invention makes higher improvement, embodied as nearly 50% in the above simple test.

## Claims

1. A rapid string matching method, comprising steps of:
(1) pre-treating a target string to obtain a simple hash table of each character of the target string, and setting a time complexity for determining whether an arbitrary character belongs to the target string to be 1;
(2) starting matching, searching a source string for characters matching with a first character of the target string, and ending searching when an end of the source string is searched;
(3) if matching, by the searched character of the source string, with the first character of the target string, jump to step (5);
(4) if non-matching, by the searched character of the source string, with the first character of the target string, move a character pointer of the source string to next character, and go to step (2);
(5) checking whether a last character of a part of the source string which starts from the searched character matching with the first character of the target string belongs to a character of the target string, if yes, go to step (6); if not, go to step (8);
(6) checking whether the target string is wholly or partially within the part of the source string which starts from the searched character matching with the first character of the target string and ends at the length of the target string and whether a whole of the part of the source string is matched, if yes, go to step (7); if no, go to step (8);
(7) moving forwards the character pointer from a character which re-matches with the first character of the target string by the length of the target string, and going to step (2);
(8) moving forwards the character pointer from the searched character matching with the first character of the target string by the length of the target string, and going to step (2).

2. A rapid string matching method as claimed in claim 1, wherein the target string is pre-treated; matching, by the source string, with the first character of the target string readily triggers matching with a last character of the target string.
